# EUROPEAN PATENT APPLICATION

(11) **EP 1 693 174 A1**
(43) Date of publication of application: **23.08.2006**
(21) Application number: 04806915.7
(22) Date of filing: 13.12.2004
(51) Int. Cl.: B29C 39/14, B29C 39/38, B29C 47/00, B29K 75/00, B29K 105/04

(54) **ELASTIC STRIP MATERIAL AND PROCESS AND APPARATUS FOR PRODUCING THE SAME**

(30) Priority: 12.12.2003 JP 2003414779
(71) Applicant: MATSUSHITA ELECTRIC INDUSTRIAL CO., LTD., Kadoma-shi, Osaka 571-8501 (JP); Sunstar Engineering Inc., Osaka 569-1134 (JP)
(72) Inventor: MIZONE, Shinya, Tsu-shi, Mie 5140061 (JP); TAKAHASHI, Yoshiyuki, Matsusaka-shi, Mie 5150032 (JP); TANAKA, Satoshi, Osaka 5620001 (JP); TOUMURA, Toshiyuki, Mukou-shi, Kyoto 6170006 (JP)
(74) Representative: Whalley, Kevin
(86) International application number: PCT/JP2004/018554
(87) International publication number: WO 2005/056267

(57) **Abstract**

To provide an elastic strip material that has a cross-sectional shape suited to intended uses such as seals or cushions, as well as a method of and an apparatus for mass-producing the strip material efficiently and inexpensively.

A heat setting composition is used whose main ingredients are a polyurethane prepolymer and a latent solidifier obtained by deactivating a solid polyamine. A compressed gas is dispersed throughout the composition to give a fluid mixture 'a', that is then foamed and heated to or above a critical temperature to solidify as the strip material. The fluid mixture 'a' is extruded from an extruder (1), guided into a liquid or gaseous heating zone (2), caused to solidify during travel within the zone, and shaped at the same time into a desired configuration before discharged from the zone (2).

## Description

### INDUSTRIAL FIELD OF THE INVENTION

The present invention relates to a strip-shaped or cord-shaped resin article (hereinafter generically called a strip material) of a moderate elasticity to afford sealing effects and cushioning effects. The strip material may be disposed in between two surfaces contacting one another such as doors, windows or furniture sets in buildings so as to keep the surfaces water-tight and/or air-tight relative to each other. Further, this strip material may durably show a sound-proofing and shock-buffering properties, without degradation in the course of time. The present invention relates also to a method of and an apparatus for making such a strip material.

### BACKGROUND ART

The prior art cushioning strip materials may typically be classified into certain seals and certain cushions, wherein the certain seals mainly attached to the outer surfaces of buildings, for example to the rims of window glasses or door glasses, are expected to render them water-tight and air-tight. The certain cushions may be secured for example to inside stopping faces for outward-swinging entrance doors, or fixed on other stopping pillars for the sliding doors including Japanese *shoji* or *fusuma* doors, so that buffering and sealing effects are provided between each stopping face and each bumping door.

The current seals of the type noted above are almost made of any of elastomers such as natural or synthetic rubbers, softened synthetic resins or foams thereof. Cross sections of such seals have depended upon the shape of orifices formed in a die to be mounted on a resin extruder. Therefore, the die must be replaced with another one whenever producing seals of any different cross section.

Thus, it has been a problem that stock of a variety of dies would raise manufacture cost. Also undesirably, high-speed production of the prior art seals has been difficult because the cross-sectional shape of a fresh extruded flow of seal material should not change until its solidification.

On the other hand, the certain cushions noted above have been manufactured in a stepwise manner. A foamed raw material of a considerably large width and thickness has been prepared at first, before slicing it longitudinally and in both the directions of thickness and width so as to provide a plurality of square or rectangular cords each of a desired cross-sectional dimension. Thus, as a drawback inherent in this process, it has been difficult to produce cushions of any modified or special cross section other than square or rectangle.
Patent Document 1: Japanese Patent Laying-Open Gazette No. 2000-117090
Patent Document 2: ibid. No. Hei. 11-30334
Patent Document 3: ibid. No. Hei. 11-128709

### DISCLOSURE OF THE INVENTION

### OBJECTS TO BE ACHIEVED

The present invention was made in view of the above-mentioned problems that had been inherent in the prior art seals and cushions, and now provides a novel elastic strip material whose cross section can be of any desired contour, without needing any variety of dies. Any proper cooperative combination of at least one simple trough with at least one simple surface shaping member may be employed herein with regard to objects of the present invention, the objects being to provide a process and an apparatus for mass-producing such a novel elastic strip material inexpensively and efficiently.

### MEANS FOR ACHIEVING THE OBJECTS

In order to achieve the objects, a heat setting composition is employed whose principal ingredients are a polyurethane prepolymer and a latent solidifying agent (hereinafter referred to as solidifier) obtained by deactivating a solid polyamine, as defined in the accompanying claim 1. A fluid mixture 'a' will be prepared by dispersing a compressed gas throughout the heat setting composition. Then, the fluid mixture 'a' is allowed to foam due to expansion of the gas and heated to or above a critical solidification temperature, thereby letting it solidify to give a strip material of a desired cross section.

A first method of producing the elastic strip material just described does comprise the steps of preparing a heat setting composition whose principal ingredients are a polyurethane prepolymer and a latent solidifier obtained by deactivating a solid polyamine, wherein a fluid mixture 'a' is formed by dispersing a compressed gas throughout the heat setting composition as defined in the accompanying claim 2. At the next step, the fluid mixture 'a' is extruded out from a nozzle (1a) of a resin extruder (1), so that an extruded stream of a desired diameter will immediately foam itself. This stream having not solidified yet will subsequently be guided into a heating zone (2) whose interior has been heated to or above a critical solidification temperature, so that the stream thus heated is allowed to solidify and simultaneously pressed into a desired peripheral shape while advancing through the heating zone (2). Finally, the foamed, solidified and pressed stream will be discharged from the heating zone (2) so as to be cooled down to an ambient room temperature.

A second method of producing the elastic strip material described above does comprise the steps of preparing a heat setting composition whose principal ingredients are a polyurethane prepolymer and a latent solidifier obtained by deactivating a solid polyamine, wherein a fluid mixture 'a' is formed by dispersing a compressed gas throughout the heat setting composition as defined in the accompanying claim 3. At the next step, the fluid mixture 'a' is extruded out from a nozzle (1a) of a resin extruder (1), so that an extruded stream of a desired diameter will immediately foam itself. This stream having not solidified yet will subsequently be guided into a liquid heating zone (2) whose interior has been heated to or above a critical solidification temperature, so that the stream thus heated is allowed to solidify and simultaneously pressed into a desired peripheral shape while advancing through the heating zone (2). Finally, the foamed, solidified and pressed stream will be discharged from the liquid heating zone (2) so as to be cooled down to an ambient room temperature.

A third method of producing the elastic strip material just described does comprise the steps of preparing a heat setting composition whose principal ingredients are a polyurethane prepolymer and a latent solidifier obtained by deactivating a solid polyamine, wherein a fluid mixture 'a' is formed by dispersing a compressed gas throughout the heat setting composition as defined in the accompanying claim 4. At the next step, the fluid mixture 'a' is extruded out from a nozzle (1a) of a resin extruder (1), so that an extruded stream of a desired diameter will immediately foam itself. This stream having not solidified yet will subsequently be guided into a gaseous heating zone (2) whose interior has been heated to or above a critical solidification temperature, so that the stream thus heated is allowed to solidify and simultaneously pressed into a desired peripheral shape while advancing through the heating zone (2). Finally, the foamed, solidified and pressed stream will be discharged from the gaseous heating zone (2) so as to be cooled down to an ambient room temperature.

From a further aspect as defined in the claim 5, the apparatus provided herein for producing the elastic strip material may comprise a resin extruder (1), a liquid tank (21) having and cooperating with at least one rotor (22), a motor (23) for driving the rotor (22) to rotate *in situ,* and a heating bath (2A) including the liquid tank. The resin extruder (1) comprises a reservoir (11) for storing therein an amount of a heat-setting composition, a gas feeding pipe (12) for charging the reservoir with a compressed gas, and a nozzle (1a) for extruding a fluid mixture 'a' to form a resin stream. The rotor (22) is constructed such that the resin stream of fluid mixture 'a' effluent from the nozzle (1a) and having already foamed but not yet solidified will be guided into a hot liquid (2a) held in the liquid tank (21) and caused to advance through it. The heating bath (2A) has therein a trough (24) formed in and along the periphery of the rotor (22) so as to receive the resin stream of fluid mixture 'a', and a surface shaping member (25) disposed close to and facing the trough (24). The fluid mixture 'a' will be heated in the heating bath (2A) so as to solidify therein and form a resin strip 'b'. The heating bath (2A) further comprises an outlet guide (26) for directing the resin strip 'b' towards the outside of the liquid tank (21).

From a still further aspect as defined in the claim 6, the apparatus provided herein for producing the elastic strip material may comprise a resin extruder (1), a gaseous heating chamber (41) having and cooperating with at least one rotor (42), a motor (43) for driving the rotor (42) to rotate *in situ,* and a heating booth (4) including the heating chamber (41). The resin extruder (1) comprises a reservoir (11) for storing therein an amount of a heat-setting composition, a gas feeding pipe (12) for charging the reservoir with a compressed gas, and a nozzle (1a) for extruding a fluid mixture 'a' to form a resin stream. The rotor (42) is constructed such that the resin stream of fluid mixture 'a' effluent from the nozzle (1a) and having already foamed but not yet solidified will be exposed to a hot gaseous interior (2b) of the gaseous heating chamber (41) and caused to advance through it. The heating chamber (41) has therein a trough (44) formed in and along the periphery of the rotor (42) so as to receive the resin stream of fluid mixture 'a', and a surface shaping member (45) disposed close to and facing the trough (44). The fluid mixture 'a' will be heated in the heating chamber (41) so as to solidify therein to form a resin strip 'b'. The heating booth (4) further comprises an outlet guide (46) for taking the resin strip 'b' out of the rotor (42) and directing it to the outside of the heating chamber (41).

The elastic strip material produced by the present method and using the present apparatus as summarized above may in some cases be an elongate article wound up on a reel or drum. Alternatively, a cutter may be disposed near the outlet of the present apparatus discharging the strip material so that on demand it can be cut into any lengths to meet requirements from the customers.

### ADVANTAGES AFFORDED HEREIN

The elastic strip material as summarized above is adapted for use as seals or cushions. It can be designed freely as to its thickness or diameter, cross-sectional shape, degree of elasticity, sealing or anti-vibration properties, taking into account the final uses after supplied to market.

The periphery of each elastic strip material that is a kind of elongate foam is however entirely covered with a skin layer. Such a skin layer protects the present strip material from absorbing any noticeable amount of water or any other swelling liquid, so that its original state, shape or properties will last a long time.

According to the present method, a fluid raw material is extruded through a nozzle having any properly designed orifice so as to immediately foam itself. Subsequently, such a foamed resin stream will be subjected to solidification and a synchronous surface shaping stage to give the strip material any desired configuration in cross section. Thus, one and the same nozzle can be used to inexpensively manufacture at an improved rate various elastic strip materials each matching its final use.

The present apparatus for production of elastic strip material comprises a nozzle that extrudes a raw material to form a foamed resin stream, and a conveying system for transporting it. The apparatus further comprises a surface shaping device acting on the resin stream during transportation thereof, so that many molds of different types and shapes are no longer necessary, but a simple and single apparatus suffices well to efficiently manufacture many types of products for different uses.

### BRIEF DESCRIPTION OF THE DRAWINGS

[Fig. 1] Front elevation of an apparatus provided in a first embodiment to produce strip materials.
[Fig. 2] Side elevation of the apparatus of the first embodiment.
[Fig. 3] Perspective view of a resin strip.
[Fig. 4] Front elevation of a modified apparatus of this embodiment.
[Fig. 5] Side elevation of the modified apparatus.
[Fig. 6] Side elevation of a further modified apparatus according to the first embodiment.
[Fig. 7] Scheme of an apparatus provided in a second embodiment to also produce strip materials.
[Fig. 8] Cross section taken along the line A - A in Fig. 7.
[Fig. 9] Side elevation of a modified apparatus according to the second embodiment.
[Fig. 10] Side elevation of a further modified apparatus according to the second embodiment.
[Fig. 11] Scheme of an apparatus provided in a third embodiment to produce strip materials.
[Figs. 12(A) to 12(F)] Cross sections of the resin strips.
[Figs. 13(G) to 13(J)] Plan views of the resin strips.
[Fig. 14] Side elevation of an exemplified system, in which the elastic strip materials of the present invention are used, as shown partly in cross section.

### REFERENCE NUMERALS

1 .... Resin extruder
- 1a ....: Extrusion nozzle
- 2 ....: Heating zone
- 2A ....: Heating bath
- 4 ....: Heating booth
- 11 ....: Composition holding reservoir
- 12 ....: Gas feeding pipe
- 21 ....: Liquid tank
- 22 ....: Rotor
- 23 ....: Motor
- 24 ....: Trough for receiving a resin stream
- 25 ....: Surface shaping member
- 26 ....: Outlet guide
- 27 ....: Shaft
- 28 ....: Heater
- 29 ....: Agitating blades
- 41 ....: Heating chamber
- 42 ....: Rotor
- 43 ....: Motor
- 44 ....: Trough for receiving a resin stream
- 45 ....: Surface shaping member
- 46 ....: Outlet guide
- 47 ....: Hot air blower
- 48 ....: Heater
- 49 ....: Antenna
- 50 ....: Reel
- 'a' ....: Fluid mixture of a composition
- 'b' ....: Resin strip

### BEST MODES OF CARRYING OUT THE INVENTION

The present invention may be carried out in any of the manners as summarized here and below. The liquid heating zone as set forth in claim 3 may not necessarily be composed of hot water, but any heating oil or any molten resin may be used insofar as they are of a poor affinity to and poor compatibility with the fluid mixture 'a' of a heat-setting composition. In order to heat the liquid forming the heating zone (2) to and maintain it at a desirable elevated temperature, it is convenient to use a heater (28) (sometimes called pipe heater) that is easy to place in the liquid of heating zone (2). Alternatively, a heating liquid from an external hot water source may be fed to this zone in a continuous and/or circulating manner.

The gaseous heating zone (2) as set forth in claim 4 may be filled with a hot air from a blower (47). Alternatively, radiation energy from a heater (48) or infrared lamp may be made use of, or electromagnetic radiation from an antenna (49) may be utilized for dielectric heating. Further, the hot gaseous interior of heating zone need not to stand alone, but any mist may be sprayed into it so as to keep the interior in an unsaturatedly or saturatedly humidified state.

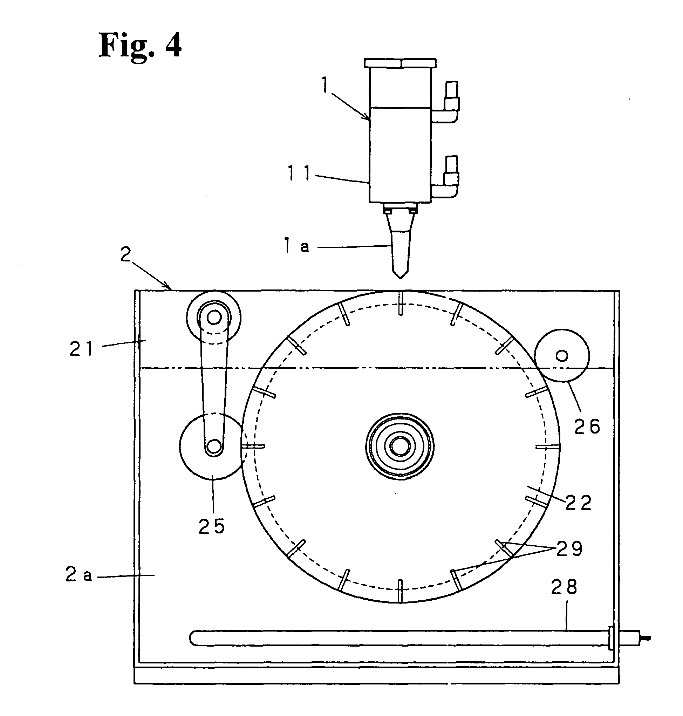

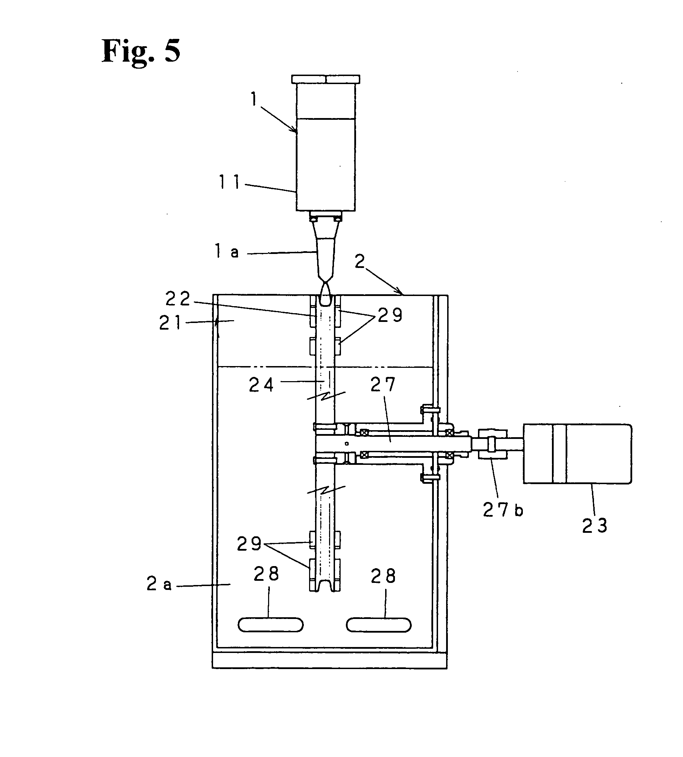

The rotor (22) as defined in claim 5 may have agitating blades (29) attached to either or both of its side faces as shown in Figs. 4 and 5 so that rotation of such a rotor (22) will automatically stir the hot liquid (2a). Alternatively, an agitating fan may be disposed in the liquid tank (21) for the same purpose.

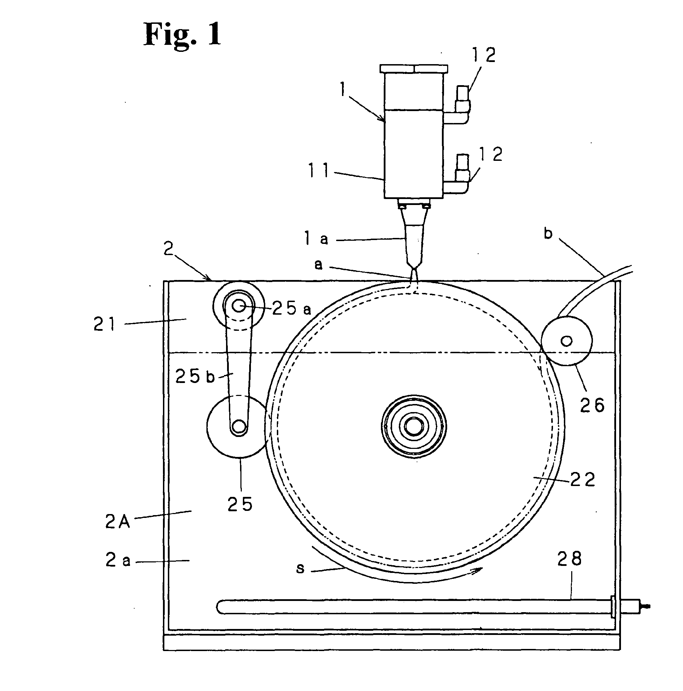

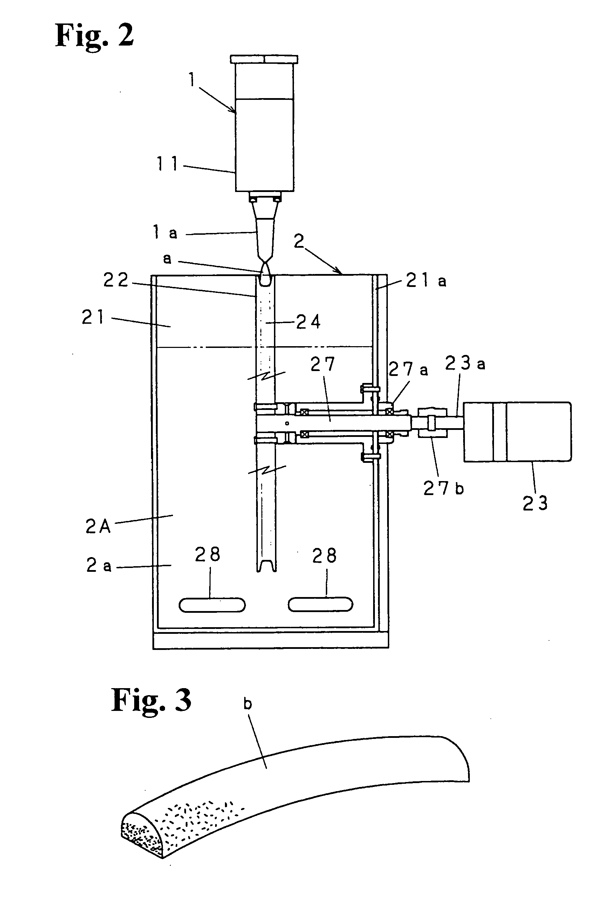

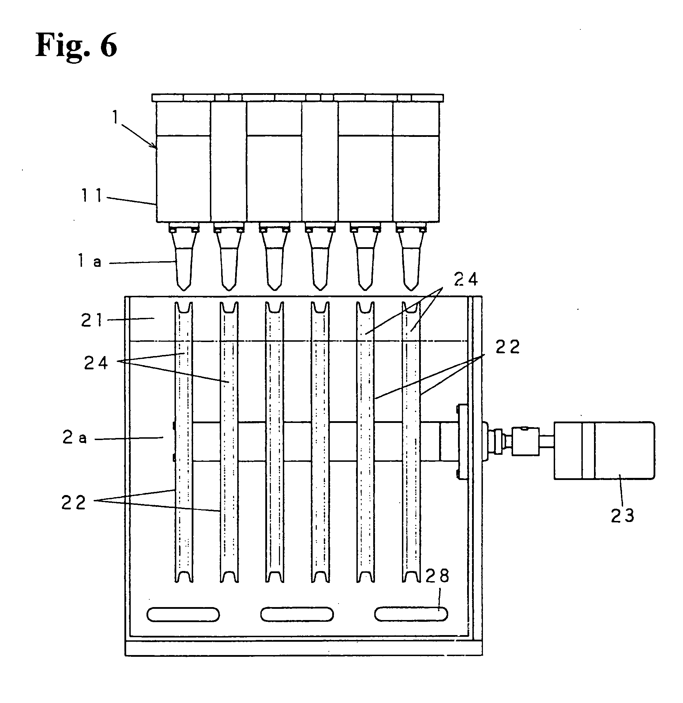

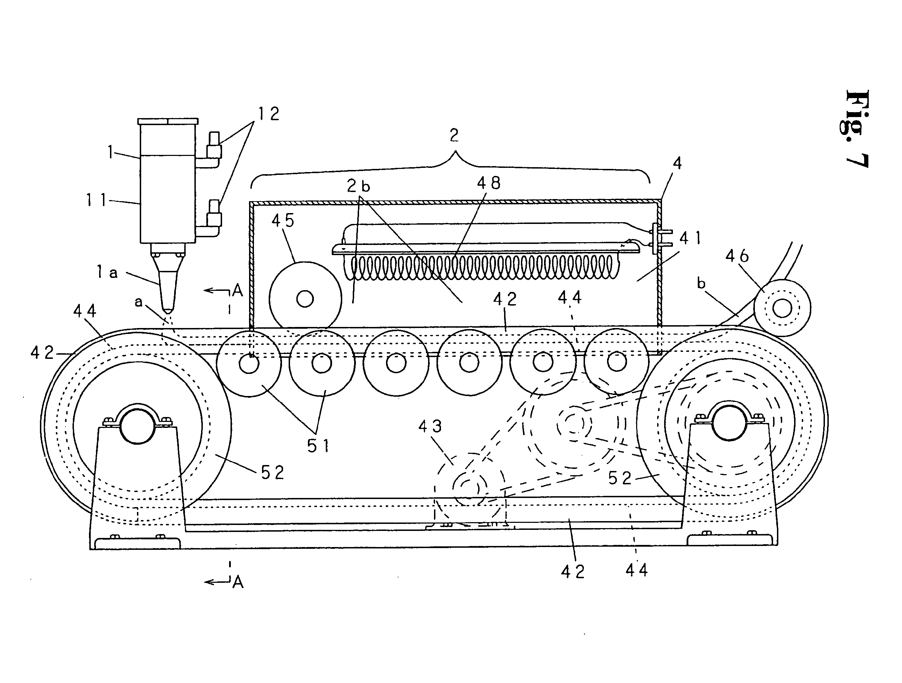

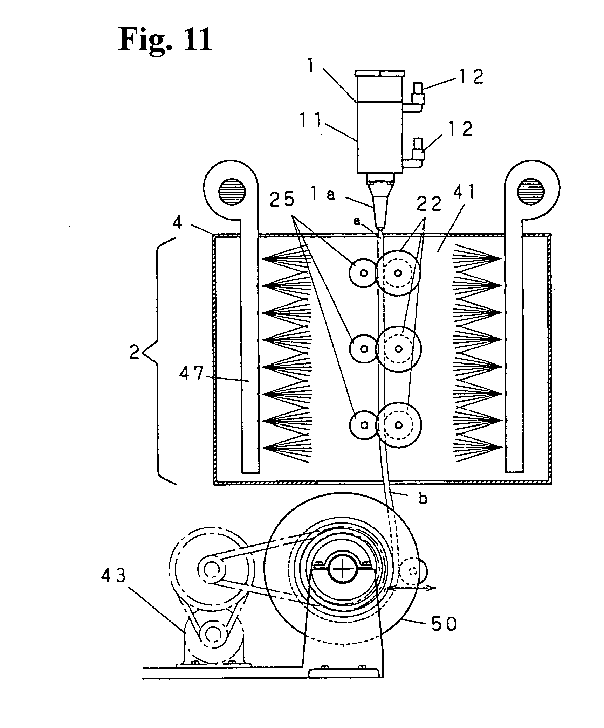

The at least one rotor (22) may either be a single rotor placed in the liquid tank (21) as shown in Figs. 1 and 2, or a few or more rotors coaxial with each other as illustrated in Fig. 6. In the latter case, the rotors (22) arranged side by side may be of the same or different diameters. In a further example shown in Fig. 11, several pairs of rotor (22) and surface shaping member (25) facing it are disposed longitudinally of the fluid mixture 'a' of heat setting composition. In this case, the surface shaping action of those rollers and members will be imparted to the heat setting composition vertically running downwards. The rotor (42) defined in claim 6 may either be formed as an endless conveyor, or as a modified type chain conveyor, as will be seen in Figs. 7 to 10. Configuration of the trough (44) for receiving and guiding the stream of fluid mixture 'a' of said composition, as well as configuration of the shaping member (45) facing the trough, may be any one of or any combination of various options.

Further, the surface shaping member (25, 45) respectively defined in claims 5 and 6 may preferably be rollers. Such rollers will exert merely light rolling friction to the strip material being produced, thereby making smooth its finished surface. However, any stationary spatulas may substitute for the rollers so as to be in a frictional contact with said strip material being produced. The outlet guides (26, 46) may also be rollers that rotate on but not injure the surface of a resin strip 'b' just finished, although any frictional channel-shaped pieces or tools may substitute well for such roller guides.

### FIRST EMBODIMENT

Now, an apparatus in accordance with a first embodiment will be described in detail, referring to Figs. 1 to 3, in which Fig. is a side elevation of the apparatus shown in its entirety but partially in cross section, Fig. 2 is a fragmentary and cross-sectional front elevation, and Fig. 3 is perspective view of a resin strip 'b' as produced using this apparatus.

For convenience of description, the apparatus itself will be discussed at first. A cylindrical member at upper regions in Figs. 1 and 2 is a resin ex truder 1 having a cylindrical reservoir 11 for storing therein a heat-setting composition detailed below. This extruder has two gas feeding pipes 12 and an extrusion nozzle 1a, through which a fluid mixture 'a' of the composition exudes to form a downward stream. The gas pipes 12 connected to side peripheral portions of reservoir 11 introduce a compressed gas into the heat-setting composition, so as to foam it subsequent to extrusion.

A rectangular body below the extruder 1 is a heating bath 2A that comprises a cubic liquid tank 21 defining therein a heating zone 2. Disposed centrally of this tank is a rotor 22 that has formed in and along its periphery a trough 24 generally U-shaped in cross section. This trough receives an un-solidified stream 'a' of the composition extruded through the nozzle 1a. As seen in Fig. 2, a shaft 27 extends through and across the side 21a of liquid tank 21, and one of its ends is fixed to the center of rotor 22. The other end of shaft is connected to a motor 23 that drives rotor to rotate in the direction of arrow 's' in Fig. 1. Consequently, the stream of fluid mixture 'a' taken up by and along the trough 24 is brought into the liquid tank 21 filled with a hot water serving as the hot liquid 2a, and is then caused to advance through it along a round path.

Also placed in the liquid tank 21 is a free roller 25 as the surface shaping member in contact with the trough 24 of rotor 22. The free roller 25 acts on the stream surface of fluid mixture 'a' to be forced into a desired configuration. A pendent lever 25b has an upper end pivoted by a shaft 25a and a lower end bearing the free roller. The fluid mixture 'a' heated by the hot liquid 2a while moving along with rotor 22 will have become a completely foamed and solidified resin strip, when leaving the trough 24 to go away from liquid tank 21. A further free roller 26 serving as the outlet guide for taking out such a resin strip is disposed in an upper region of tank 21, opposite to the free roller 25 and across the rotor 22. The reference numerals 27a and 27b in Fig. 2 denote a support sleeve for the shaft 27, and a coupling for connecting the outer end of shaft 27 to an output 23a of motor 23, respectively. The further numeral 28 denotes heaters located in the tank 21 and near its bottom so as to heat the water 2a.

Next, a typical example of the method using the above apparatus to produce an elastic strip material will be described. A heat setting composition mainly comprising a polyurethane prepolymer and a latent solidifier that is a deactivated solid amine will be supplied to the reservoir 11 of resin extruder I. Subsequently, a compressed foaming gas is blown into this reservoir through the pipes 12 so as to effect inside the reservoir a uniform mixing to provide a compressed fluid mixture 'a' of that composition. This mixture 'a' will then be extruded downwards from the nozzle 1a fixed on a bottom of reservoir 11. The thus formed resin stream of a desired diameter or thickness descends into the trough 24 formed in and around the rotor 22. As the internal pressure of such a resin stream decreases instantly to an ambient pressure, it will foam itself prior to solidification. The rotor 22 then rotating will carry the un-solidified resin stream of mixture 'a' into hot water as the heating liquid 2a. Due to its elevated temperature for example 80 °C that is equal to or above the critical solidification temperature, the fluid mixture 'a' will be heated to solidify while advancing through the hot water. In unison with such a solidification process, the surface of such a mixture stream 'a' just being solidified is subjected to the pressure of the surface shaping roller 25 so as to assume a predetermined desirable configuration. A resin strip 'b' formed in this manner will further advance within the heating liquid 2a towards the exit until the outlet roller 26 takes it out of the heating zone 2. As a result, this resin strip cools down to ambient temperature to give a stable and elastic strip material of a desired cross-sectional shape.

As seen from Fig. 3 showing the thus produced resin strip 'b', it has a number of minute internal pores, discrete or continuous, due to the thermal foaming. This structure enhances softness and cushioning properties of a finished elastic strip material, whether elongate or cut into lengths.

Examples of polyurethane prepolymer as the one principal ingredient of the heat setting composition employed herein are: polyisocyanates and urethane prepolymers, used alone or in any combination. Urethane prepolymers have active end isocyanate groups due to reaction of any proper polyol compound with a surplus amount of any polyisocyanate. An example of the core particles of latent solidifier as the other main component of heat setting composition is a coarser powder of solid polyamine whose melting point is lower than 50 °C and whose median diameter is about 20 micrometers. Each core particle has its surface firmly coated with a fine inert powder whose median diameter is about 2 micrometers, so that any active amino groups present are not exposed on the surface of core particle. Such a powder-coated polyamine is blended with the urethane prepolymer in such a manner that the molar ratio of amino groups to isocyanate groups is included in a range of from 1 : 0.5 to I : 2.0 when the latent solidifier is heated and reactivated.

Fine powder for preparation of such powder-coated polyamine may be chosen from the group consisting of inorganic powders such as talc, titanium dioxide, calcium carbonate and the like substances physically comparable therewith, and organic powders of polyacrylic resins, polystyrenes, polyethylenes, polyvinyl chlorides and the like. It is possible to use any one of these powders alone, or to use two or more of them in combination. Ratio by weight of the coarser core particles to solid polyamine to the finer coating particles may be from about 1 : 0.001 to 1 : 0.5. A frictionally shearing system may be employed to prepare the solidifier, in which coarser core particles of solid polyamine are ground while the added amount of coating are also ground to give finer particles for covering each core. Examples of a machine to carry out this process are certain stirring blenders such as the so-called restricted impact type blender and the so-called compressive shear type one.

The heat setting composition shows a critical temperature with respect to its solidification, and in detail it does not solidify at temperatures below 60 °C but almost completely solidify at 80 °C. Compressed air is used as the foaming agent that is injected into and dispersed in such a heat-setting composition. Any other comparable gas may be used in place of ambient air. Details of mechanical dispersion of the foaming gas throughout the fluid composition are disclosed in the Patent Document 3 to be known well to public.

Figs. 4 and 5 show a modification of the first embodiment, wherein both the sides (or either side) of rotor 22 have (has) a plurality of agitating blades 29 fixed thereto. These blades arranged along the periphery of rotor protrude sideways and outwards so that its rotation causes spontaneous circulation or agitation of the heating liquid 2a.

Fig. 6 shows another modification of the first embodiment, wherein plural rotors 22 (six rotors in this figure) of the same dimension are arranged parallel and coaxially. In this case, plural streams of fluid mixture 'a' can be taken up by these rotors to make plural resin strips 'b' concurrently. Such rotors 22 need not necessarily be of the same diameter but may be of varied diameters.

### SECOND EMBODIMENT

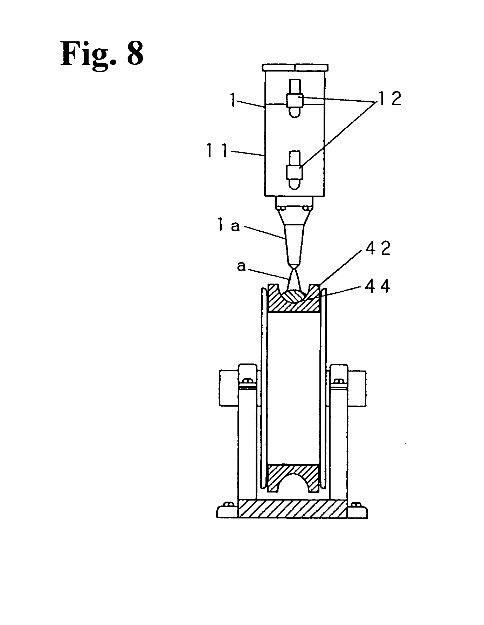

Next, a second embodiment will be described, whose side elevation is shown in Fig. 7 and whose cross section along the line A - A is shown in Fig. 8. This apparatus for making the resin strip 'b' does however adopts a gaseous heating zone in place of the liquid one employed in the former cases. Also in this embodiment, a resin composition will be extruded through a nozzle 1a of extruder 1 to form an instantly foamed stream of fluid mixture 'a'. For example, a conveying belt having a V-shaped (or U-shaped) cross section with a flat bottom will receive into its trough 44 the descending fluid mixture stream 'a', and this conveyor as an endless rotor 42 transports such a fluid mixture into a heating chamber 41. This chamber is kept at a temperature of or above 80 °C so that the fluid mixture 'a' is heated to solidify during its travel through this chamber 41, until taken out of it at a location just before or just behind its exit. An outlet guide 46 operates to remove the thus solidified continuous resin strip 'b' from the endless rotor 42. The reference numeral 51 in Fig. 7 denotes intermediate support rollers that have rectangular and peripheral grooves similar to those of the main drive and driven end rollers 52. Those grooves each with a flat bottom do serve as holders or supporters for the conveying belt. It will be understood that this belt may alternatively be any normal V-belt or U-belt deficient of such a flat bottom as mentioned above, so as to match normal V-rollers or U-rollers.

The heating booth 4 in the present embodiment can be regarded as being composed of three horizontal sections, a first upstream one of which is a falling section where the fluid mixture 'a' drops to be received on the endless rotor 42. A second section is the heating zone 2 in which the fluid mixture is heated, and a downstream third section is a discharging zone where the solidified resin strip 'b' is separated from the rotor 42. It will be apparent that the upstream first section and downstream third section are necessary whether located inside or outside the heating zone 2.

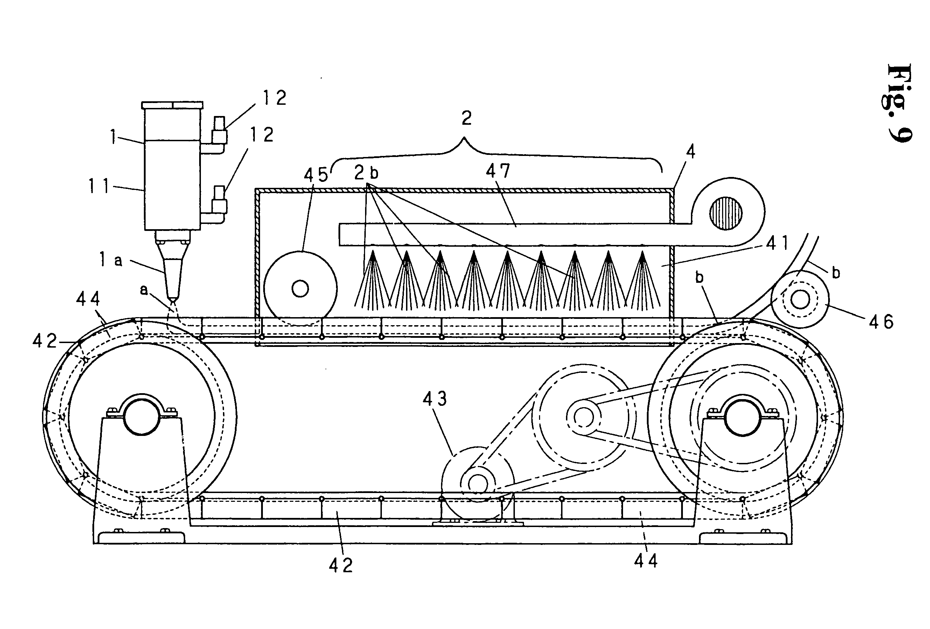

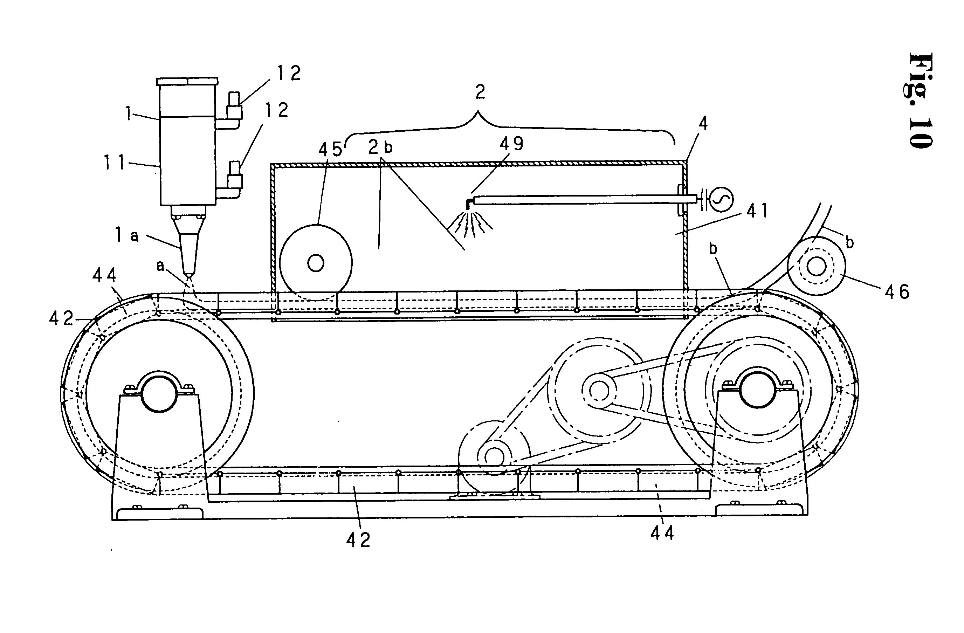

A manifold 47 of hot air blowing nozzles as shown in Fig. 9 is a substitution for the heater 48 disposed in the heating zone 2. A humidifying nozzle (not shown) may be installed in this zone, in addition to such a heater 48 and nozzles 47. In this case, the interior of heating zone can optionally be controlled to be at a dry condition, an unsaturated humidity or otherwise at a saturated humidity. The endless rotor 42 in the modification shown in Fig. 9 is a chain type conveyor consisting of plural links connected one to another. Fitted in an endless outward groove extending all over those links is an endless belt that is made of a soft and heat-resistant synthetic rubber or plastics and that has a continuous trough formed therein. In a further modification illustrated in Fig. 10, electrodes (not shown) or an antenna 49 is installed in the heating zone so as to emit high-frequency radio beams for dielectric heating of the fluid mixture. The second embodiment may apply to an array of two or more extruders 1 driven in unison to improve manufacture efficiency.

A third embodiment is illustrated in Fig. 11, wherein the apparatus of second embodiment is considerably simplified. The stream of heat-setting fluid mixture 'a' will also be extruded from the nozzle 1a of extruder 1 as in the second embodiment so as to immediately foam itself. However in this case, the resin stream not commencing solidification will be allowed to vertically descend straight and advance downwards through the heating zone 2. Rotors 22 and surface shaping rollers 25 are driven synchronously with the extrusion speed so as to shape the fluid mixture. Concurrently with such a shaping action of those rotors and rollers, hot gas of a proper temperature from a blower 47 or a radiation from a heater (not shown) will heat and solidify the mixture 'a' to give a resin strip 'b'. A reel 50 taking up such a strip is also driven at the same speed as the extrusion speed. The third embodiment also may apply to an array of two or more extruders 1 driven in unison to improve manufacture efficiency.

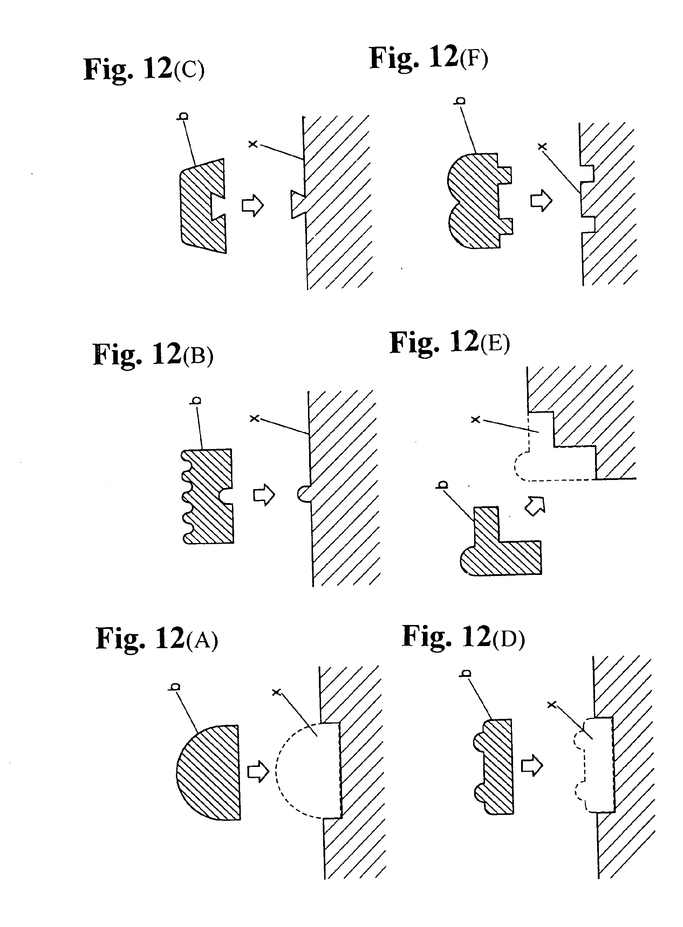

Figs. 12(A) to 12(F) are schemes of the various cross sections of resin strip 'b' provided herein. Fig. 12(A) is one of the schemes showing a generally semicircular cross section with a flat bottom. Fig. 12(B) is the other scheme of a generally rectangular cross section with a corrugated top and a positioning notch at middle of its bottom, with Fig. 12(C) showing a trapezoid cross section with a positioning dovetail groove at middle of its bottom. Fig. 12 (D) is the further scheme of a depressed rectangular cross section Fig. 12 (D) is the further scheme of a depressed rectangular cross section with two ridges protruding up from its top. Fig. 12(E) is the still further scheme of an upright and rectangular cross section with an arm protruding sideways from one side thereof, with Fig. 12(F) showing another cross section with a double-bulging top and a bottom having two parallel fixing ribs. A length of the resin strip 'b' is to be attached to a portion 'x' in each object article.

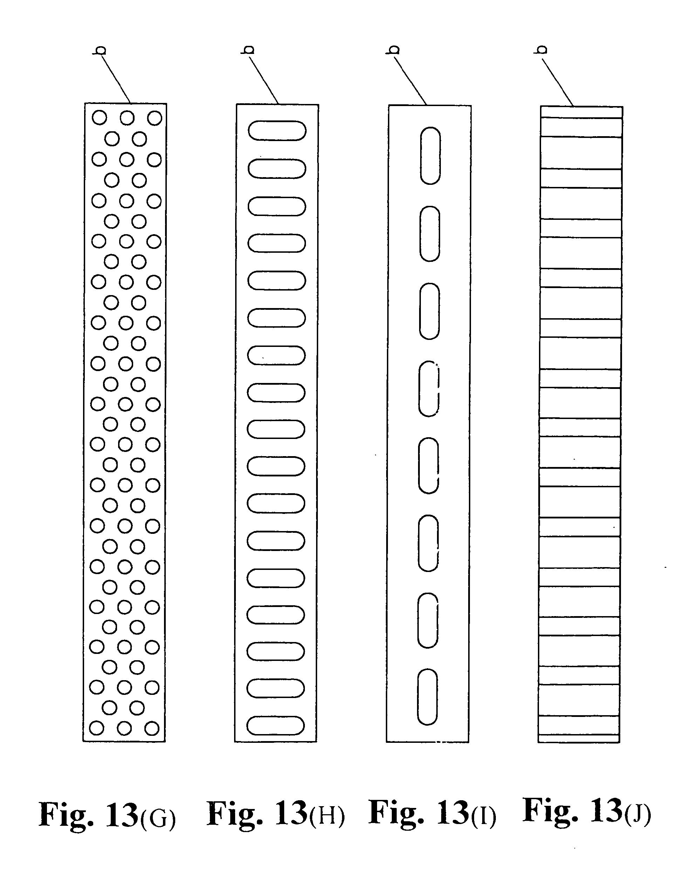

Figs. 13(G) to 13(J) are various schemes of the top surface of resin strip 'b', wherein Fig. 13(G) shows a plurality of dimples scattered all over the top surface, with Fig. 13(H) showing transverse elliptic recesses arranged at regular intervals longitudinally of the strip. Fig. 13(I) shows a series of longitudinal elliptic recesses arranged at regular intervals, with Fig. 13(J) showing transverse grooves arranged at regular intervals longitudinally of the strip.

As seen in the foregoing schemes, the resin strip 'b' of the invention may be varied by voluntarily designing the shape of troughs 24 and 44 for receiving the fluid mixture 'a' of heat-setting composition as well as the configuration of surface shaping members 25 and 45. Variety of such cross sections and surface patterns would not affect adversely the production efficiency of the present strip material.

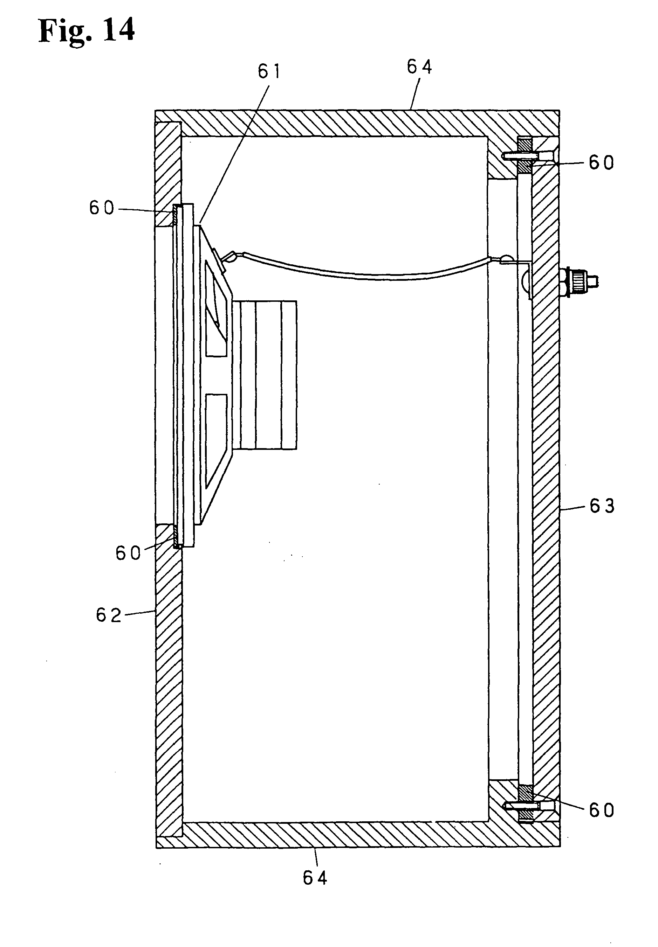

The elastic strip material provided herein may be used in many fields and for various purposes. It can be interposed for instance between two flanges for the pipe ends abutting one on another. It also may be disposed between the speaker and baffle-board in speaker systems, or between engagement portions of the rear cover and side walls of a speaker cabinet. It may further intervene between a front panel of air conditioner and a fixing part or member. In these cases, the elastic strip material will serves as a gaskets or packing for improving air-tightness, for insulating heat and/or for suppressing vibration. Fig. 14 is the cross section of an exemplified speaker system in which the elastic strip material is used as gaskets and packing 60. The reference numerals 61, 62, 63 and 64 denote a speaker, a baffle-board, a rear cover and side walls, respectively.

The foregoing typical embodiments and modifications thereof are not intended to restrict the scope, but may be varied or changed insofar as the same purposes and functions are achieved by means of any equivalent structural features, without affecting the pith and morrow of present invention.

### INDUSTRIAL APPLICABILITY

The elastic strip material of the present invention is suited for use as seals or cushions, and can be deigned to be of any appropriate diameter and/or cross-sectional shape. Any requirements or duties imposed on this material can be met by optimizing its elasticity, sealing capability and/or anti-vibration properties. Further, its periphery is completely and perfectly covered with a skin layer no to absorb any noticeable amount of liquid substance, so that its applicability covers a wide range of industrial fields.

## Claims

1. An elastic strip material composed of a heat setting composition whose principal ingredients are a polyurethane prepolymer and a latent solidifier obtained by deactivating a solid polyamine, the prepolymer and the solidifier preliminarily forming a fluid mixture 'a' to subsequently contain a compressed gas dispersed throughout the fluid mixture, so that the fluid mixture 'a' is allowed to foam due to expansion of the gas and heated to or above a critical solidification temperature, thereby letting it solidify to give a strip material of a desired cross section.

2. A method of producing an elastic strip material, comprising the steps of: preparing a heat setting composition whose principal ingredients are a polyurethane prepolymer and a latent solidifier obtained by deactivating a solid polyamine, so that a fluid mixture 'a' is formed by dispersing a compressed gas throughout the heat setting composition, extruding out the fluid mixture 'a' from a nozzle (1a) of a resin extruder (1), so that an extruded stream of a desired diameter immediately foams itself, subsequently guiding the stream having not solidified yet into a heating zone (2) whose interior has been heated to or above a critical solidification temperature, so that the stream thus heated is allowed to solidify and simultaneously pressed into a desired peripheral shape while advancing through the heating zone (2), and finally discharging from the heating zone (2) the foamed, solidified and pressed stream so as to be cooled down to an ambient room temperature, thereby giving the elastic strip material.

3. A method of producing an elastic strip material, comprising the steps of: preparing a heat setting composition whose principal ingredients are a polyurethane prepolymer and a latent solidifier obtained by deactivating a solid polyamine, so that a fluid mixture 'a' is formed by dispersing a compressed gas throughout the heat setting composition, extruding out the fluid mixture 'a' from a nozzle (1a) of a resin extruder (1), so that an extruded stream of a desired diameter immediately foams itself, subsequently guiding the stream having not solidified yet into a liquid heating zone (2) whose interior has been heated to or above a critical solidification temperature, so that the stream thus heated is allowed to solidify and simultaneously pressed into a desired peripheral shape while advancing through the heating zone (2), and finally discharging from the liquid heating zone (2) the foamed, solidified and pressed stream so as to be cooled down to an ambient room temperature, thereby giving the elastic strip material.

4. A method of producing an elastic strip material, comprising the steps of: preparing a heat setting composition whose principal ingredients are a polyurethane prepolymer and a latent solidifier obtained by deactivating a solid polyamine, so that a fluid mixture 'a' is formed by dispersing a compressed gas throughout the heat setting composition, extruding out the fluid mixture 'a' from a nozzle (1a) of a resin extruder (1), so that an extruded stream of a desired diameter immediately foams itself, subsequently guiding the stream having not solidified yet into a gaseous heating zone (2) whose interior has been heated to or above a critical solidification temperature, so that the stream thus heated is allowed to solidify and simultaneously pressed into a desired peripheral shape while advancing through the heating zone (2), and finally discharging from the gaseous heating zone (2) the foamed, solidified and pressed stream so as to be cooled down to an ambient room temperature, thereby giving the elastic strip material.

5. An apparatus for producing an elastic strip material, comprising a resin extruder (1), a liquid tank (21) having and cooperating with at least one rotor (22), a motor (23) for driving the rotor (22) to rotate *in situ,* and a heating bath (2A) including the liquid tank, the resin extruder (1) comprising a reservoir (11) for storing therein an amount of a heat-setting composition, a gas feeding pipe (12) for charging the reservoir with a compressed gas, and a nozzle (1a) for extruding a fluid mixture 'a' to form a resin stream, the rotor (22) being constructed such that the resin stream of fluid mixture 'a' effluent from the nozzle (1a) and having already foamed but not yet solidified is guided into a hot liquid (2a) held in the liquid tank (21) and caused to advance through it, the heating bath (2A) having therein a trough (24) formed in and along the periphery of the rotor (22) so as to receive the resin stream of fluid mixture 'a', and a surface shaping member (25) disposed close to and facing the trough (24) so that the fluid mixture 'a' is heated in the heating bath (2A) so as to solidify therein and form a resin strip 'b', the heating bath (2A) further comprising an outlet guide (26) for directing the resin strip 'b' towards the outside of the liquid tank (21), thereby giving the elastic strip material

6. An apparatus for producing an elastic strip material, comprising a resin extruder (1), a gaseous heating chamber (41) having and cooperating with at least one rotor (42), a motor (43) for driving the rotor (42) to rotate *in situ,* and a heating booth (4) including the heating chamber (41), the resin extruder (1) comprising a reservoir (11) for storing therein an amount of a heat-setting composition, a gas feeding pipe (12) for charging the reservoir with a compressed gas, and a nozzle (1a) for extruding a fluid mixture 'a' to form a resin stream, the rotor (42) being constructed such that the resin stream of fluid mixture 'a' effluent from the nozzle (1a) and having already foamed but not yet solidified is exposed to a hot gaseous interior (2b) of the gaseous heating chamber (41) and caused to advance through it, the heating chamber (41) having therein a trough (44) formed in and along the periphery of the rotor (42) so as to receive the resin stream of fluid mixture 'a', and a surface shaping member (45) disposed close to and facing the trough (44), so that the fluid mixture 'a' is heated in the gaseous heating chamber (41) so as to solidify therein to form a resin strip 'b', the heating booth (4) further comprising an outlet guide (46) for taking the resin strip 'b' out of the rotor (42) and directing it to the outside of the heating chamber (41), thereby giving the elastic strip material.
